# EUROPEAN PATENT SPECIFICATION

(11) **EP 1 934 978 B1**
(45) Date of publication and mention of the grant of the patent: **18.03.2009**
(21) Application number: 06793806.8
(22) Date of filing: 25.09.2006
(51) Int. Cl.: G11B 7/09

(54) **APPARATUS FOR ACCESSING STORAGE MEDIA**
VORRICHTUNGEN ZUM ZUGREIFEN AUF SPEICHERMEDIEN
DISPOSITIF POUR ACCEDER A UN MOYEN DE STOCKAGE

(30) Priority: 13.10.2005 EP 05109539
(43) Date of publication of application: 25.06.2008
(73) Proprietor: THOMSON Licensing, 92100 Boulogne-Billancourt (FR)
(72) Inventor: BAMMERT, Michael, 78739 Hardt (DE); SUZUKI, Tsuneo, 78087 Mönchweiler (DE); DUPPER, Rolf, 78050 Villingen-Schwenningen (DE)
(74) Representative: Thies, Stephan
(86) International application number: PCT/EP2006/066699
(87) International publication number: WO 2007/042389

(56) References cited:
- EP-A2- 0 341 829
- WO-A-97/39445
- WO-A-99/56277
- JP-A- 5 303 759
- US-A1- 6 008 924
- US-A1- 2001 028 621
- US-A1- 2004 027 674

## Description

### Field of the invention

The present invention relates to apparatus for accessing moving storage media, in particular to actuators on disk media pickups.

### Background of the invention

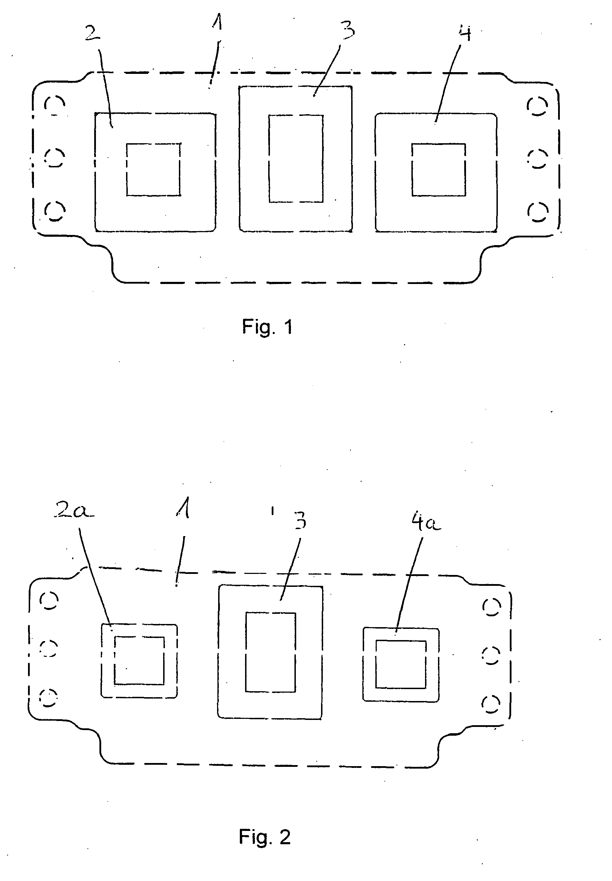

Moving storage media access is done with pickups having a transducer mounted on a transducer holder in an actuator. The actuator comprises tracking and focus or distance servo means and may also comprise tilt servo means. In a pickup design similar to the disclosure of EP 1098304 A, coils for the servo means, to interact with a magnetic field of a static magnet arrangement, are realized on a printed circuit board, as shown in Fig. 1. A printed circuit board 1 bears a first coil 2, a second coil 3, and a third coil 4, among which the first coil 2 and the third coil 4 are tilt coils. Electric currents are imposed on the tilt coils 2, 4 in such a way that, together with the given orientation of the respective magnetic field, not shown, permeating each coil, the resulting Lorentz forces are parallel to the focussing or distancing direction, but of opposite direction. As a consequence, the printed circuit board or carrier 1 is subjected to a rotation around its normal axis.

For the focus or distance servo, sensitivity should be as large as possible so that a strong magnetic field is generally aimed at. On the other hand, tilt actuator function should have optimized sensitivity which should not be too high. If too high, transducer holder will be too sensitive and unavoidable noise contained in a tilt coil current may cause additional unwanted and unexpected tilt of the transducer holder.

One way to overcome this, as shown in Fig. 2, is to have less turns of the tilt coils 2a, 4a, but this at the same time reduces the resistance. Against this, additional external i.e. discrete resistance components can be used, but this will be more expensive. An alternative way to increase the resistance is to use thinner conductor lines, e.g. copper line on printed circuit board PCB, which always is limited by the manufacturing technology.

EP 0 342 829 which is considered to represent the closest prior art discloses a pickup having a flat coil and a conducting load for exhibiting ohmic resistance.

### Invention

According to the invention, additional copper line is added onto the same carrier as the actuator coil, such as printed circuit board PCB. This is advantageous because it achieves a higher resistance while avoiding additional component, with other words it makes a servo more stable yet does not need external resistance.

According to the invention, a pickup for accessing moving storage media, which pickup has a flat coil on the surface of a carrier, has on a surface of the carrier a conducting lead for exhibiting ohmic resistance, which is connected in series with the flat coil. This has the advantage that a part of the surface of the carrier, which is anyway given, is used to realize an additional ohmic resistance, thereby avoiding the need of a discrete extra component.

In the pickup according to the invention, at least a part of the conducting lead is of meandering design. This has the advantage that even when situated, entirely or partially, within a magnetic field, a current through the conducting lead does not contribute to or perturb the mechanical forces being generated by the current when flowing through the flat coil.

Advantageously, in the pickup according to the invention, the flat coil as well as the conducting lead are embodied as strips of metal born on surfaces of the carrier. This has the advantage that they both can be manufactured using the same manufacturing steps, and, together with the meandering design, it allows the widths of the strips of metal to be substantially equal.

An apparatus for accessing moving storage media according to the invention has a pickup as described above.

### Drawings

Exemplary embodiments of the invention are illustrated in the drawings and are explained in more detail in the following description.

In the figures:
- Fig. 1: shows a printed circuit board having tilt coils;
- Fig. 2: shows a printed circuit board having smaller tilt coils and needing an extra discrete resistance component;
- Fig. 3: shows a printed circuit board having tilt coils in an arrangement according to the invention;
- Fig. 4: shows an apparatus for accessing moving storage media according to the invention.

### Exemplary embodiments

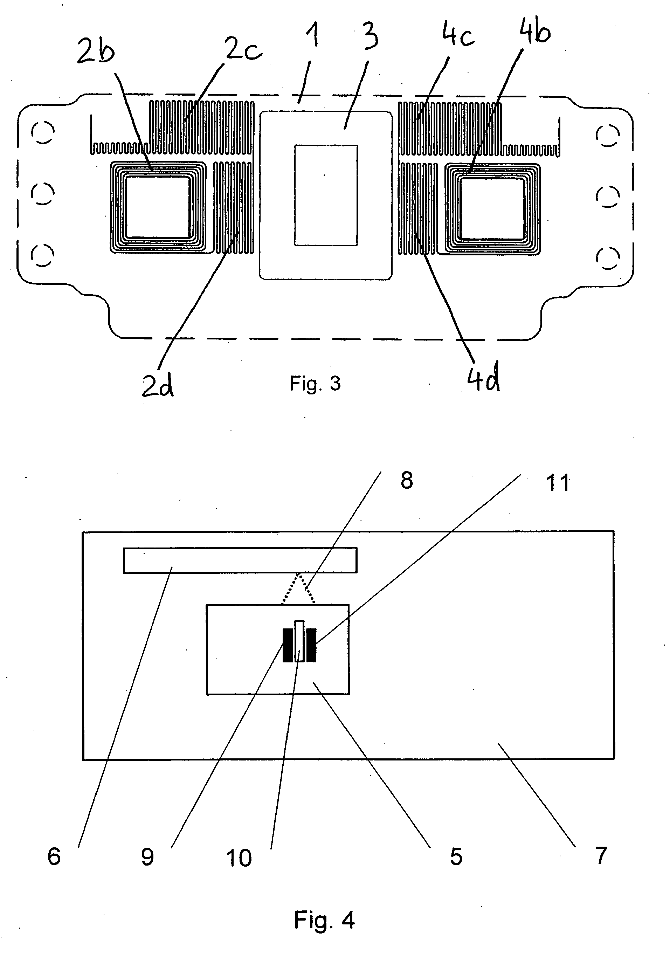

Fig. 3 shows a carrier in the form of a printed circuit board PCB 1 for use in a pickup for accessing moving storage media. The carrier 1 has a first tilt coil 2b and a second tilt coil 4b in an arrangement according to the invention. The tilt coils 2b, 4b have some length of dummy lines or conducting leads 2c, 2d, 4c, 4d connected in series thereto, which provide an extra amount of electrical resistance. The tilt coils 2b, 4b and the extra dummy lines 2c, 2d, 4c, 4d are embodied as copper lines. As can be seen, the extra dummy lines 2c, 2d, 4c, 4d are shaped in meandering form, so that they behave magnetically neutral even when they face a magnetic pole or otherwise are immersed in a magnetic field. The Lorentz forces generated by the up-going branches and those of the down-going branches of the extra dummy lines 2c, 2d, 4c, 4d compensate so that the resulting force generated by the entire extra dummy lines 2c, 2d, 4c, 4d vanishes or at least is very small. The same holds between any left-going and right-going branches. This design enables to use an unchanged copper line thickness, same as for the tilt coils 2b, 4b themselves, hence there is no special requirement on the manufacturing of the PCB 1. The PCB 1, for reasons of mechanical stability, will in any case have unused parts to which the extra dummy lines 2c, 2d, 4c, 4d can be placed.

Fig. 4 shows an apparatus 7 for accessing moving storage media 6 according to the invention. The moving storage media 6 is arranged in the apparatus 7 in removable or non-removable manner. The apparatus also has the pickup 5 according to the invention, which accesses 8 the moving storage medium 6. In the pickup 5, a transducer, not shown, is mechanically connected to the carrier 10, which is arranged to be movable in a magnetic field generated by two parallel magnets 9, 11. The carrier 10 has on its surface the tilt coils and extra dummy lines as described, not shown in Fig. 4.

Adding an extra amount of resistance to a tilt coil circuit also has the advantages of easing the power requirements for the servo amplifier feeding the coil, and it also helps to prevent parasitic high frequency oscillations, which otherwise may occur.

For moving storage media access, it is known that tracking and focus servo means are needed, especially in accessing removable media, due to the bigger media clamping tolerances involved. This servo control keeps the transducer at a well-defined distance to the surface of the storage medium, e.g. keeps the lens in focus on the tracks for optical media, and secures that the transducer follows the information tracks on the medium. This kind of servo control is used for reading access as well as for writing access in case of writable media. At least some of the servo control means are conceptually identical for reading as well as writing access.

With other words, the invention describes an apparatus for accessing moving storage media with an actuator having a flat coil 2b, 4b on a surface of a carrier 1, where for inserting an ohmic resistance into the coil circuit the same carrier 1 has on one of its surfaces a conducting lead 2c, 2d, 4c, 4d designed mainly to exhibit ohmic resistance, connected to the flat coil 2b, 4b in series. With a meandering design, the conducting lead 2c, 2d, 4c, 4d can be manufactured from a strip of metal substrate the same width as that of the coil 2b, 4b.

## Claims

1. A pickup (5) for accessing (8) moving storage media (6), the pickup (5) having a flat coil (2b, 4b) on the surface of a carrier (1, 10), and on a surface of the carrier (1, 10) a conducting lead (2c, 2d, 4c, 4d) for exhibiting ohmic resistance which is connected in series with the coil (2b, 4b), **characterised in that** at least a part of the conducting lead (2c, 2d, 4c, 4d) is of meandering design.

2. The pickup (5) of claim 1, wherein the flat coil (2b, 4b) is embodied as a first strip of metal, the conducting lead (2c, 2d, 4c, 4d) is embodied as a second strip of metal, the first and second strip are both born on surfaces of the carrier (1, 10), and wherein the width of the first strip is substantially equal to the width of the second strip.

3. An apparatus (7) for accessing (8) moving storage media (6), having a pickup (5) according to claim 1 or 2.

## Patentansprüche

1. Aufnehmer (5) zum Zugreifen (8) auf sich bewegende Speichermedien (6), wobei der Aufnehmer (5) eine flache Spule (2b, 4b) auf der Oberfläche eines Trägers (1, 10) aufweist, und auf einer Oberfläche des Trägers (1, 10) einen leitenden Anschlussdraht (2c, 2d, 4c, 4d) zum Erzeugen von Gleichstromwiderstand, welcher mit der Spule (2b, 4b) in Serie geschaltet ist, **dadurch gekennzeichnet, dass** mindestens ein Teil des leitenden Anschlussdrahtes (2c, 2d, 4c, 4d) ein Mäandermuster aufweist.

2. Aufnehmer (5) nach Anspruch 1, wobei die flache Spule (2b, 4b) als ein erster Metallstreifen ausgestaltet ist, der leitende Anschlussdraht (2c, 2d, 4c, 4d) als ein zweiter Metallstreifen ausgestaltet ist, der erste und zweite Streifen beide auf Oberflächen des Trägers (1, 10) liegen und wobei die Breite des ersten Streifens im Wesentlichen gleich der Breite des zweiten Streifens ist.

3. Einrichtung (7) zum Zugreifen (8) auf sich bewegende Speichermedien (6), die einen Aufnehmer (5) nach Anspruch 1 oder 2 aufweist.

## Revendications

1. Tête de lecture (5) d'accès (8) à un support de mémorisation mobile (6), la tête de lecture (5) comportant une bobine plate (2b, 4b) sur la surface d'un support (1, 10), et sur cette surface un fil de sortie conducteur (2c, 2d, 4c, 4d) qui présente une résistance ohmique connectée en série avec la bobine (2b, 4b),
**caractérisés en ce que** au moins une partie du fil de sortie conducteur (2c, 2d, 4c, 4d) se présente sous la forme de méandres.

2. Tête de lecture (5) selon la revendication 1, dans laquelle la bobine plate (2b, 4b) est intégrée sous forme de première bande de métal, le fil de sortie conducteur (2c, 2d, 4c, 4d) est intégré sous forme de deuxième bande de métal, la première et la deuxième bandes de métal se trouvant toutes deux sur les faces du support (1, 10), et dans laquelle la largeur de la première bande est sensiblement égale à celle de la deuxième bande.

3. Appareil (7) d'accès (8) à un support de mémorisation mobile (6) comportant une tête de lecture (5) conforme à la revendication 1 ou 2.
